Europäisches Patentamt

European Patent Office

Office européen des brevets

(19)

(11) Publication number: 0 399 614
A1

# EUROPEAN PATENT APPLICATION

(21) Application number: 90201294.7

(22) Date of filing: 22.05.90

(51) Int. Cl.5: B07B 1/15

(30) Priority: 23.05.89 NL 8901285

(43) Date of publication of application:
28.11.90 Bulletin 90/48

(84) Designated Contracting States:
AT BE CH DE DK ES FR GB IT LI LU NL SE

(71) Applicant: Zijlstra & Bolhuis B.V.
Beneden Dwarsdiep 25
NL-9645 LA Veendam(NL)

(72) Inventor: Middel, Jan
Paalslagen 5
NL-9468 HL Annen(NL)

(74) Representative: Smulders, Theodorus A.H.J.,
Ir. et al
Vereenigde Octrooibureaux Nieuwe Parklaan
107
NL-2587 BP 's-Gravenhage(NL)

(54) Method of grading crops according to square size and apparatus for carrying out the method.

(57) The invention relates to a method of grading crops such as bulbous and tuberous crops according to square size into a number of grades using a grading plant comprising a plurality of rollers (30, 31, 32) of corrugated profile mounted in a frame in spaced parallel relation, in which the dips of the profile of two successive rollers facing each other form a plurality of substantially square passageways, the rollers in operation are driven for rotation, and the crops to be graded are fed to the grading plant in a direction substantially transverse to the longitudinal direction of the rollers (30, 31, 32). According to the invention a grading plant is used in which the rollers that correspond to one and the same grade are each shifted in their longitudinal direction relatively to the adjacent rollers over a relatively small distance (A) in comparison with the situation where the respective dips and tops of the corrugated profiles are arranged exactly directly opposite each other.

FIG.3

EP 0 399 614 A1

The invention relates to a method of grading crops such as bulbous and tuberous crops according to square size into a number of grades using a grading plant comprising a plurality of rollers of corrugated profile mounted in a frame in spaced parallel relation, in which the dips of the profile of two successive rollers facing each other form a plurality of substantially square passageways, the rollers in operation are driven for rotation, and the crops to be graded are fed to the grading plant in a direction substantially transverse to the longitudinal direction of the rollers, and to an apparatus for carrying out the method.

Such a method is known from Dutch patent application 8602843 disclosing an apparatus for grading bulbous and tuberous crops on the basis of square size. The square size is a unit of measurement accepted and used internationally for crops, in particular potatoes. The square size is defined as the length in millimeters of the side of the smallest possible square opening that a crop to be graded is capable of passing through.

In the grading plant known from Dutch patent application 8602843 the respective tops and dips of the successive corrugated rollers are directly opposite each other. The profiles are so shaped that the faces of two opposite dips together contain four substantially straight paths together defining a square opening. Since the crops to be graded generally have rounded shapes, the corners of the square opening are of minor relevance. Of these corners, one pair is defined by the angle formed by two successive rollers and the other is defined by the profile of the roller. The latter pair is often rounded off or flattened. Similarly, the tops of the profiles may be rounded off or flattened without adverse effects on the grading accuracy.

By changing the distance between successive rollers the effective size of the passageways can be changed. In this way potatoes, for example, can be graded into a range of grades between 30 and 70 mm with acceptable accuracy. The potatoes are supplied in a direction transverse to the longitudinal direction of the driven profiled rollers and conveyed over the grading plant by the rotating rollers. As soon as a potato reaches an opening that is sufficiently large for the potato to pass through, the potato will fall through the opening to be received below. Viewed from the beginning of the grading plant in the direction of travel of the potatoes, the distance between successive rollers, and hence the size of the openings, may increase in accordance with the desired grades, so that a multiple system is obtained.

The invention aims to improve the known technique, in particular the grading accuracy, and generally to provide a simple and effective grading method for grading potatoes, for example, or other crops according to size. To that effect, a method of the type described hereinabove is characterized according to the invention by using a grading plant in which the rollers that correspond to one and the same grade are each shifted in their longitudinal direction relatively to the adjacent rollers over a relatively small distance in comparison with the situation where the respective dips and tops of the corrugated profiles are exactly directly opposite each other.

It is observed that German Offenlegungsschrift 1806555 discloses a grading plant for tuberous crops, which also comprises a plurality of successive corrugated rollers. Furthermore, the rollers can be shifted relatively to each other in the longitudinal direction. Such shifting, however, serves exclusively for setting the desired grade, with the rollers remaining unchanged and the centre-to-centre distance of the axes of the rollers remaining the same. Accordingly, the shift is zero for the rollers corresponding to the largest square size and increases up to half a period of the corrugated profile for the rollers corresponding to the smallest square size. Thus, in this known grading plant the largest crops are graded in the manner also known from Dutch patent application 8602843, and the grading for the smaller grades is no longer effected according to the square size principle and is less accurate.

According to one embodiment of the invention a grading plant is used in which the rollers corresponding to at least one of the grades are shifted each relatively to its preceding roller in alternately opposite directions, so that the crops to be graded traverse a zigzag path over the rollers.

This method has been shown to lead to a very high grading accuracy, which is presumably due to the fact that the crops are unable to develop great speed. This reduces the risk of the crops skipping the grading holes of the proper size. Furthermore, the position of the crops relative to the holes changes continually during their zigzag course, so that there is a greater chance that a crop that is still in a cross position at a first hole will not fail to fall through a next hole of the same square size.

The invention will now be further explained with reference to the accompanying drawings, in which

Fig. 1 is a schematic plan view of a part of a known square-grading machine;

Fig. 2 schematically shows the position of the profiled rollers of a known apparatus relative to each other;

Fig. 3 schematically shows an example of the position of the profiled rollers of an apparatus according to the invention.

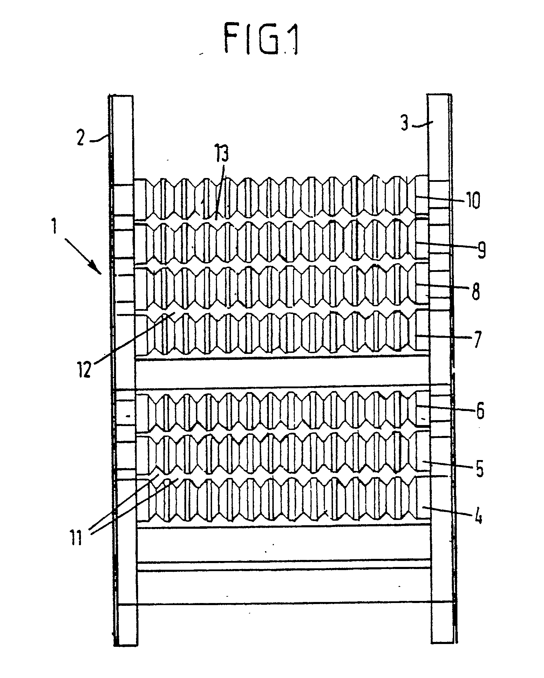

Fig. 1 schematically shows a known potato grading plant of the square-grading type. The apparatus 1 shown has a frame comprising two substantially parallel longitudinal girders. Between the longitudinal girders a plurality of substantially parallel profiled rollers 4-10 are mounted. The rollers have a corrugated profile with the tops and the dips of successive rollers being arranged precisely opposite each other, so that between each pair of rollers a plurality of grading holes as indicated at 11, 12, 13 are formed.

When the crops to be graded are supplied in the direction of the arrow 14 the holes 11 will generally be smaller than the holes 12. The rollers may be divided in groups of two successive rollers with the holes between the rollers of a group being larger than the holes between the rollers of a preceding group and smaller than the holes of a next group.

In operation the rollers are driven for rotation by driving means (not shown). The rollers 4-10 shown may be made from a solid roll provided with recesses, but may also be built up from sections mounted end by end on a shaft. The sections may, for example, be hourglass-shaped, conical on one or both ends, etc.

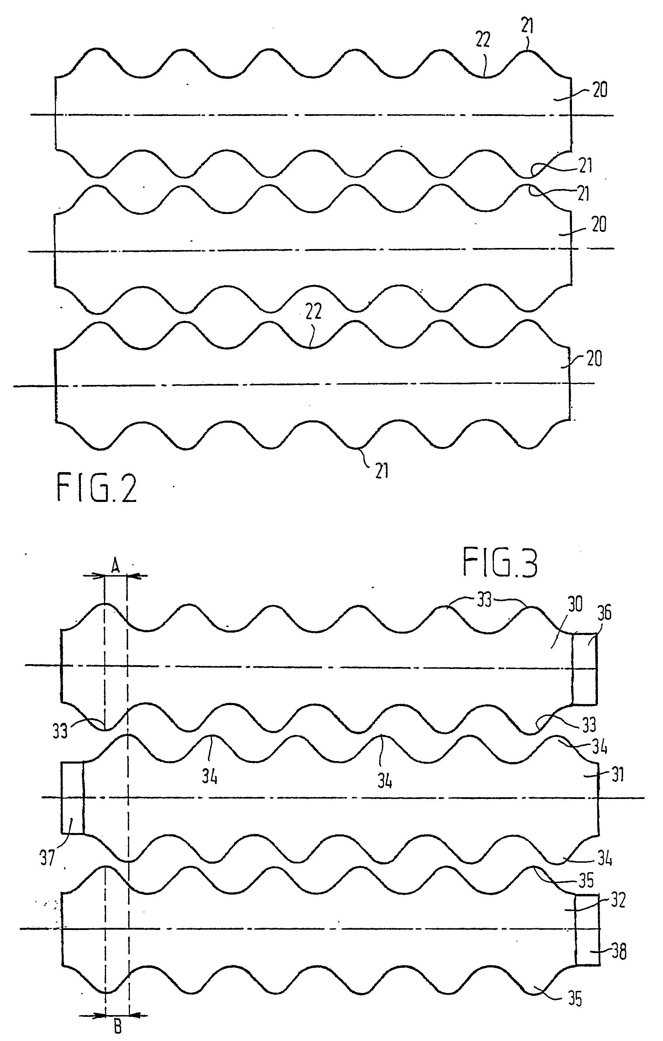

Drawn on an enlarged scale in comparison with Fig. 1, Fig. 2 shows three grading rollers 20 which have a corrugated profile with rounded tops 21 and dips 22. The rollers are part of a grading plant (not shown) comprising a frame and driving means and the like. The drawing shows that the tops and dips of the corrugations of the successive rollers are arranged substantially directly opposite each other as in the apparatus shown in Fig. 1.

In a way similar to Fig. 2, Fig. 3 schematically shows three grading rollers mounted in a grading plant (not shown) in the manner according to the invention. The rollers are indicated at 30, 31 and 32. The tops 33 of the roller 30 are not arranged directly opposite the tops 34 of the adjacent roller 31, but have been shifted relatively to the tops 33 over a distance A in the longitudinal direction of the rollers.

Similarly, the tops 35 of the roller 32 have been shifted relatively to the roller 31 over a distance B which may be the same as distance A. At least in the case where rollers 30-32 belong to the same group, the distances A and B are preferably the same. Further, distance A may be fixed or adjustable.

As shown in Fig. 3, the rollers are preferably mounted in a position where they have been shifted alternately to the right and to the left relatively to the preceding roller, so that the crops to be graded traverse a zigzag course over the rollers. It is also possible, however, to mount the successive rollers in a position where they have been shifted in the same direction, so that the crops to be graded traverse a substantially oblique path over the grading rollers. The arrangement shown in Fig.

3 can readily be obtained by using identical rollers comprising spacers as indicated at 36, 37, 38.

Experiments with potatoes that were graded into grades of sizes ranging from 35 to 70 mm have shown that a grading plant according to the invention in which the shift of successive rollers relative to each other is about 2 to 20 mm yields considerably more accurate grading results. A very high grading accuracy, considerably higher than the usual degree of accuracy, was found in experiments with the roller arrangement according to Fig. 3.

It is observed that various modifications will readily occur to a skilled person after reading the above. Thus the rollers may consist of sections or be made in one piece, have flattened or, conversely, sharp, or rounded tops and dips, etc. It will be clear the invention can also be used with the shift being optionally adjusted for grading potatoes or other crops in different size grades. Such modifications are considered to fall within the framework of the invention.

## Claims

1. A method of grading crops such as bulbous and tuberous crops according to square size into a number of grades using a grading plant comprising a plurality of rollers of corrugated profile mounted in a frame in spaced parallel relation, in which the dips of the profile of two successive rollers facing each other form a plurality of substantially square passageways, the rollers in operation are driven for rotation, and the crops to be graded are fed to the grading plant in a direction substantially transverse to the longitudinal direction of the rollers, characterized by using a grading plant in which the rollers that correspond to one and the same grade are each shifted in their longitudinal direction relatively to the adjacent rollers over a relatively small distance in comparison with the situation where the respective dips and tops of the corrugated profiles are arranged exactly directly opposite each other.

2. A method according to claim 1, characterized by using a grading plant in which the rollers corresponding to at least one of the grades are shifted alternately in opposite directions relatively to the preceding roller, so that the crops to be graded traverse a zigzag path over the rollers.

3. A method according to claim 1 or 2 for grading potatoes into grades of square sizes ranging from about 30 to about 70 mm, characterized in that the shift between two successive rollers corresponding to the same grade is selected from the range of from about 2 to about 20 mm.

4. A method according to claim 3, characterized in that the shift is selected from the range of from about 10 to about 16 mm.

5. Grading apparatus for carrying out the method according to any one of the preceding claims, characterized in that the tops and the dips of the corrugated profiles of at least a number of successive rollers are arranged in a position where they have been shifted relatively to each other over a pre determined distance viewed in the longitudinal direction of the rollers.

6. Grading apparatus according to claim 5, chracterized in that the distance over which the tops of a roller are shifted relatively to the tops of an adjacent roller is adjustable.

7. Grading apparatus according to claim 5 or 6, characterized by a plurality of groups of two or more successive rollers, in which the shift between each pair of successive rollers belonging to the same group has the same value.

8. Grading apparatus according to one of the preceding claims 5-7, characterized in that at least a number of successive rollers are shifted alternately in opposite directions relatively to the preceding roller.

9. Grading apparatus according to one of the preceding claims adapted for grading potatoes according to square size into grades in the range of from about 35 to about 70 mm, characterized in that the shift of the tops of the corrugated profiles of successive rollers relatively to each other is in the range of from about 2 to 20 mm.

10. Grading apparatus according to claim 9, characterized in that the shift is in the range from about 10 to about 16 mm.

FIG.1

FIG.2

FIG.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,D | DE-A-1 806 555 (KUNZ & CO.) <br> * Page 3, line 3 - page 6, line 13; figures 1,2 * | 1-10 | B 07 B 1/15 |
| A | DE-A-3 346 895 (BUTTERING) <br> * Page 12, line 4 - page 15, line 10; figures 1-4 * | 1,5 | |
| A | US-A-1 621 695 (F.J. TUITE et al.) <br> * Page 1, line 88 - page 2, line 80; figures 1-4 * | 1,5 | |
| A,D | NL-A-8 602 843 (MIEDEMA) | | |

TECHNICAL FIELDS SEARCHED (Int. Cl.5)

B 07 B
A 01 D

The present search report has been drawn up for all claims

| Place of search | Date of completion of the search | Examiner |
|---|---|---|
| THE HAGUE | 31-08-1990 | LAVAL J.C.A |

EPO FORM 1503 03.82 (P0401)